# EUROPEAN PATENT APPLICATION

(11) **EP 1 953 682 A1**
(43) Date of publication of application: **06.08.2008**
(21) Application number: 06832866.5
(22) Date of filing: 17.11.2006
(51) Int. Cl.: G06K 17/00, G06K 19/07, H04B 1/59, H04B 7/26, H04M 1/00

(54) **PORTABLE TERMINAL**

(30) Priority: 25.11.2005 JP 2005340880
(71) Applicant: MATSUSHITA ELECTRIC INDUSTRIAL CO., LTD., Osaka 571-8501 (JP)
(72) Inventor: OHMOTO, Akihiro, Chuo-ku Osaka 540-6207 (JP)
(74) Representative: Grünecker, Kinkeldey, Stockmair & Schwanhäusser Anwaltssozietät
(86) International application number: PCT/JP2006/322987
(87) International publication number: WO 2007/060888

(57) **Abstract**

To provide a mobile terminal capable of switching an unlocked IC card to a lock state with optimum timing for the IC card user while preventing an unlocked IC card from being skimmed.

A mobile terminal 1 according to the invention includes a use limit instruction part 131 for switching an IC card 17 between a lock state to inhibit wireless communications with a card reader/writer 2 and an unlock state to permit wireless communications with a card reader/writer 2 and a voltage detector 18 for detecting the radio wave strength of a radio wave received from the card reader/writer 2 with the IC card 17 in the unlock state, wherein the use limit instruction part 131 switches the IC card 17 to the lock state when the radio wave strength detected by the voltage detector 18 has made a transition from above a threshold to below the threshold.

## Description

### TECHNICAL FIELD

The present invention relates to a mobile terminal that mounts an IC card for performing wireless communications with an IC card reader and in particular to a mobile terminal capable of switching the IC card reader between a lock state where wireless communications with an IC card reader is inhibited and an unlock state where wireless communications with an IC card reader is permitted.

### BACKGROUND ART

In recent years, various services using a non-contact IC card have been provided. For example, such services include payment of charge at a store or a vending machine, adjustment the fare at means of transportation such as the railway and bus, or management of entrance/exit of attendees at various venues.

A non-contact IC card may be used fraudulently by a third party who has acquired the non-contact IC card because any card user who has held a non-contact IC card over an IC card reader receives the above services. Thus, arrangement is desired where a card user is authenticated and only a card user who has passed the authentication may receive the services although it is difficult to provide an ultra-thin non-contact IC card with such arrangement.

Currently, mobile terminals that mount an IC card to provide the features of a non-contact IC card are available on the market. Among them are mobile terminals with arrangement to authenticate a card user and an authenticated card user alone is qualified to use the IC card. For example, with the mobile terminal described in Patent Reference 1, a personal identification number is previously registered to a mobile terminal that mounts an IC card by a mobile terminal user per IC card or per service available to an IC card, a personal identification number is inputted before using an IC card feature otherwise unavailable, and the IC card feature is made available for a predetermined time only when the inputted personal identification number has matched the registered personal identification number. By using the mobile terminal, it is possible to prevent a third party who has acquired an IC card from fraudulently using the IC card as well as prevent a malicious third party as an IC card bearer from skimming the IC card.
Patent Reference 1: JP-A-2003-016398

### DISCLOSURE OF THE INVENTION

With the mobile terminal described in Patent Reference 1, after the user inputted a personal identification number before using the IC card features, when a predetermined time has elapsed since the state where the IC card features are available (hereinafter referred to as the unlock state) is reached, the card is switched to the unavailable state where the IC card features are not available (hereinafter referred to as the lock state). In case the predetermined time is too short, the card user has to unlock an IC card and then immediately hold a mobile terminal mounting the IC card over an IC card reader. In case the predetermined time is too long, there is an increasing possibility of the IC card being skimmed. An optimum interval of the predetermined time differs between card users so that it is difficult to set a fixed time interval.

With the mobile terminal described in Patent Reference 1, the user must input a four-digit personal identification number to place an IC card in the unlock state before using the IC card each time the user makes available the IC card features. This results in cumbersome operation of placing the locked IC card in the unlock state, which is burdensome to the user of a mobile terminal.

The invention has been accomplished in view of the above circumstances. An object of the invention is to provide a mobile terminal capable of switching an unlocked IC card to a lock state with optimum timing for the IC card user while preventing an unlocked IC card from being skimmed.

Another object of the invention is to provide a mobile terminal capable of switching a locked IC card to an unlock state with simple operation while preventing an IC card from being fraudulently used or skimmed.

The invention provides a mobile terminal comprising an IC circuit capable of performing wireless communications with an IC card reader, the mobile terminal further comprising: an IC card use controller for switching the IC card to a lock state where wireless communication with the IC card reader is inhibited or an unlock state where wireless communication with the IC card reader is permitted; and a radio wave strength detector for the IC circuit in the unlock state to detect the radio wave strength of a radio wave received from the IC card reader; wherein the IC card use controller switches the IC circuit to the lock state when the radio wave strength detected by the radio wave strength detector has made a transition from a threshold or above to below the threshold.

In this configuration, when the radio wave strength of a radio wave transmitted from an IC card reader has dropped below a threshold, that is, when the IC card reader and the mobile terminal have been away for a certain distance, the IC card is switched to the lock state. In case a radio wave in medium or low frequencies is transmitted from an IC card reader, the distance between an IC card reader and a mobile terminal where radio communications are available is some centimeters. In case the radio wave strength of a radio wave transmitted from an IC card reader some centimeters away is set as a threshold, the IC card is switched to a lock state at the instant when the user of a mobile terminal moves an IC card away from an IC card reader following wireless communications initiated by holding the IC card in an unlock state over the IC card reader. It is thus possible to keep the IC card in the unlock state in a minimum duration necessary for wireless communications with the IC card reader. Thus, the duration the IC card in the unlock state could be skimmed is minimized. The user of a mobile terminal does not have to know switchover of an IC card to the lock state thus eliminating a load on the user of a mobile terminal attributable to switchover of an IC card from the unlock state to the lock state.

The invention also provides a mobile terminal comprising: an operation part for accepting input operation from the user of the mobile terminal; and a radio authentication part for detecting the distance to an external wireless communication unit and determining whether authentication is allowed or inhibited depending on whether the distance to the wireless communication unit is within an authentication-allowed distance; wherein the IC card use controller accepts predetermined input operation and switches the IC circuit to the unlock state when the radio authentication part has determined that authentication is allowed.

With this configuration, in case the user of a mobile terminal holds both the mobile terminal and a radio communication unit set as a counterpart of the mobile terminal and when the user of a mobile terminal has made predetermined operation on the mobile terminal, the mobile terminal switches the locked IC card to an unlock state. In case the radio communication unit and the mobile terminal are not close to each other, particularly in case the user of a mobile terminal holds a radio communication unit but not a mobile terminal, there is no possibility of the IC card being unlocked thus preventing the IC card from being fraudulently used or skimmed. In case the user of a mobile terminal holds both a radio communication unit and a mobile terminal, the user of a mobile terminal makes simple operation such as a push on an operation key on the mobile terminal to place the IC card in an unlock state. The locked IC card is thus switched to the unlock state with such simple operation. After switching the IC card from the lock state to the unlock state with such simple operation, the user of a mobile terminal holds the unlocked IC card over an IC card reader to initiate wireless communications. At the instant when the user moves the IC card away from the IC card reader, the IC card is switched to the lock state. It is thus possible to keep the IC card in the unlock state in a minimum duration necessary for wireless communications with the IC card reader.

The mobile terminal according to the invention is capable of switching an unlocked IC card to a lock state with optimum timing for the IC card user while preventing an unlocked IC card from being skimmed. The mobile terminal according to the invention is also capable of switching a locked IC card to an unlock state with simple operation while preventing an IC card from being fraudulently used or skimmed.

### BRIEF DESCRIPTION OF THE DRAWINGS

Fig. 1 shows the outline of the processing of switching to an unlock state or a lock state an IC card mounted on a mobile terminal made by the mobile terminal according to an embodiment of the invention.
Fig. 2 is a block diagram the mobile terminal according to an embodiment of the invention.
Fig. 3 is a flow of processing by the mobile terminal according to an embodiment of the invention.

BEST MODE FOR CARRYING OUT THE INVENTION

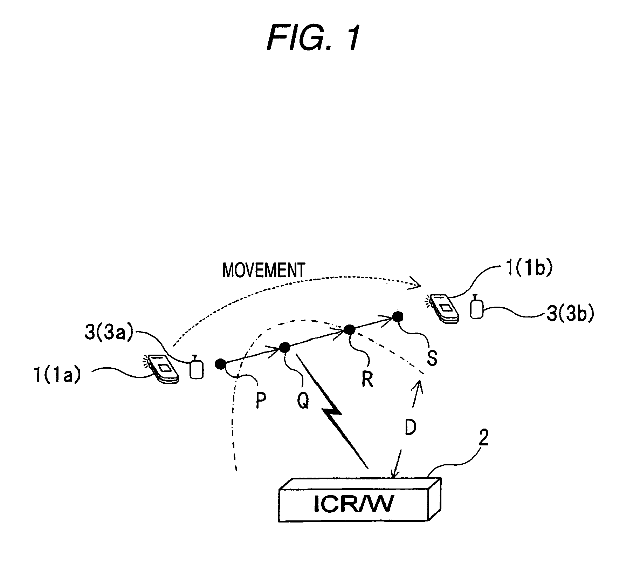

Outline of the processing made by the mobile terminal according to an embodiment of the invention will be described referring to Fig. 1. Fig. 1 shows the outline of the processing of switching to an unlock state or a lock state an IC cardmounted on a mobile terminal made by the mobile terminal according to an embodiment of the invention.

### [Outline of switchover processing from a lock state to an unlock state]

Assume that a mobile terminal 1 including an IC card moves from the point P to the point S via the points Q and R. Assume that the distance from a card reader/writer 2 to the IC card mounted on the mobile terminal 1 is within the range of D and data read/write from/to the IC card is available. The distance from a mobile terminal 1a at the point Q to the card reader/writer 2 is below the distance D. The distance from the mobile terminal 1a at the point R to the card reader/writer 2 is equal to the distance D. The distance from a mobile terminal 1b at the point P or S to the card reader/writer 2 is above the distance D.

The mobile terminal 1 performs radio authentication with the wireless communication unit 3. In case the distance to the wireless communication unit 3 is within an authentication distance (the distance between the mobile terminal 1a and the wireless communication unit 3a and the distance between the mobile terminal 1b and the wireless communication unit 3b shown in Fig. 1 are both within the authentication distance), it is determined that authentication is approved (that is, the mobile terminal 1 is used by a user of a mobile terminal holding the wireless communication unit 3 as a counterpart of the mobile terminal 1) thus allowing input operation of an operation key on the mobile terminal to be accepted. In case it is determined that the distance is greater than the authentication distance, it is determined that authentication is disapproved (that is, the mobile terminal 1 is used by a third party not holding the wireless communication unit 3 as a counterpart of the mobile terminal 1) thus inhibiting use of various features of the mobile terminal (including acceptance of input operation using an operation key). In case the distance from the mobile terminal 1 to the wireless communication unit 3 becomes greater than the authentication distance or stays greater than the authentication distance, the mobile terminal 1 does not unconditionally switch the IC card on the mobile terminal 1 to a lock state. Or, the mobile terminal 1 maintains the lock state of the IC card and does not switch the IC card to the unlock state. In the following description, it is assumed that the mobile terminal 1 and the wireless communication unit 3 have moved to the point S from the point P within the authentication distance.

Accepting input operation using an operation key (for example, setting a push on a side key on the side face of the mobile terminal as predetermined input operation minimizes the load of operation on the user of a mobile terminal) at the point P, the mobile terminal 1 with its IC card locked switches the locked IC card to an unlock state since authentication with the wireless communication unit 3 is approved (point P). The IC card switched to the unlock state by the mobile terminal 1 starts to communicate with the card reader/writer 2 when the mobile terminal 1 has moved to the point Q where the IC card can communicate with the card reader/writer 2, and permits data read/write from/to the IC card (point Q).

### [Outline of switchover processing from an unlock state to a lock state]

The mobile terminal 1 including an IC card switches the IC card to an unlock state and then constantly measures the radio wave strength of a radio wave received via an antenna provided on the IC card by the IC card that has initiated communications with the card reader/writer 2. The radio wave strength measured by the mobile terminal 1 increases from the point P to the point Q and the decreases from the point Q to the point S as the mobile terminal 1 is moved from the point P to the point R via the point Q by the user of a mobile terminal. The mobile terminal 1, detecting that the field strength at the point Q that is above a threshold to permit communications between the IC card and the card reader/writer 2 (this threshold is a radio wave strength measured at the point R) has dropped below the threshold near the point R, switches the IC card from the unlock state to the lock state (point R). The mobile terminal 1 that has moved from the point P to the point Q maintains the unlock state of the IC card because the previous field strength smaller than the threshold has exceeded the threshold.

By way of the switchover processing from a lock state to an unlock state and the switchover processing from an unlock state to a lock state, in case the user of a mobile terminal holds both the mobile terminal and a radio communication unit set as a counterpart of the mobile terminal and when the user of a mobile terminal has made predetermined operation on the mobile terminal, the mobile terminal switches the locked IC card to an unlock state. In case the radio communication unit and the mobile terminal are not close to each other, particularly in case the user of a mobile terminal holds a radio communication unit but not a mobile terminal, there is no possibility of the IC card being unlocked thus preventing the IC card from being fraudulently used or skimmed. In case the user of a mobile terminal holds both a radio communication unit and a mobile terminal, the user of a mobile terminal makes simple operation such as a push on an operation key on the mobile terminal to place the IC card in an unlock state. The locked IC card is thus switched to the unlock state with such simple operation. After switching the IC card from the lock state to the unlock state with such simple operation, the user of a mobile terminal holds the unlocked IC card over an IC card reader to initiate wireless communications. At the instant when the user moves the IC card away from the IC card reader, the IC card is switched to the lock state. It is thus possible to keep the IC card in the unlock state in a minimum duration necessary for wireless communications with the IC card reader.

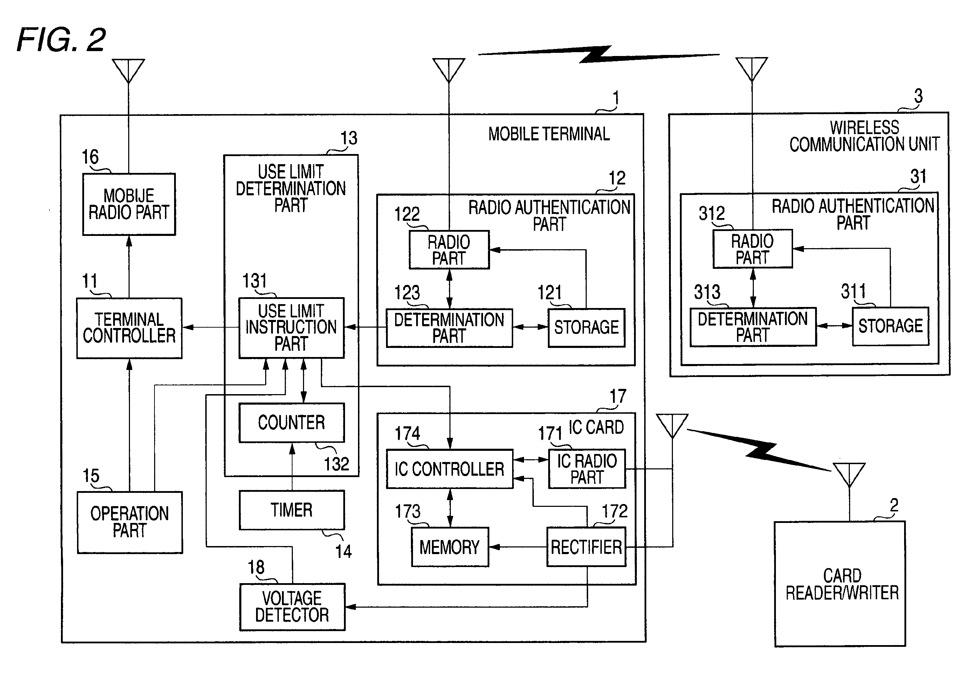

The configuration of a mobile terminal according to an embodiment of the invention will be detailed referring to the block diagram of the mobile terminal according to an embodiment of the invention shown in Fig. 2. While in this embodiment a mobile terminal 1 as an example performs authentication with the wireless communication unit 3 as well as includes a mobile communication feature to enable communications with a base station for mobile communications, the mobile terminal 1 need not necessarily include the mobile communication feature so that various types of mobile terminals may be used.

As show in Fig, 2, the mobile terminal 1 comprises a terminal controller 11, a radio authentication part 12, a use limit determination section 13, a timer 14, an operation part 15, a mobile radio part 16, an IC card 17, and a voltage detector 18.

The terminal controller 11 controls features of the mobile terminal 1 such as an electronic settlement feature, data reference feature and call termination feature. The radio authentication part 12 operates as an example of radio authentication part defined in the claims. The radio authentication part 12 detects the distance to the wireless communication unit 3 and performs authentication based on whether the distance to the wireless communication unit 3 is within the authentication distance. The use limit determination section 13 operates as an example of IC card use limit controller defined in the claims. The use limit determination section 13 limits the use of a predetermined feature of the mobile terminal 1 based on the result of authentication by the radio authentication part. The timer 14 outputs a clock to the use limit determination section 13 per predetermined time. The operation part 15 operates as an operation part defined in the claims. For example, the operation part 15 accepts an operation input from the user and outputs an operation signal to the terminal controller 11 and the use limit determination part 13. The mobile radio part 16 performs wireless communications with a base station. The IC card 17 operates as an example of an IC circuit defined in the claims. The IC card 17 performs wireless communications with the card reader/writer 2 and accepts data read/write by the card reader/writer 2. The voltage detector 18 operates as an example of radio wave strength detector defined in the claims. The voltage detector 18 measures the voltage value obtained by rectifying the radio wave received by the IC card 17 from the card reader/writer 2.

The radio authentication part 12 includes a storage 121, a radio part 122 and a determination part 123. The storage 121 stores an authentication ID such as an identification code used for radio authentication with the wireless communication unit 3. The authentication ID is an ID previously associated with the mobile terminal 1 and the wireless communication unit 3. By grasping that the authentication IDs form a pair via wireless communications, authentication is constantly enabled.

The radio part 122 performs wireless communications with the wireless communication unit 3. The radio part 122 transmits an authentication ID stored in the storage 121 to the wireless communication unit 3 as well as receives a radio signal from the wireless communication unit 3.

The determination part 123 demodulates a receive signal from the wireless communication unit 3 which is received at the radio part 122 and analyzes its ID and detects the distance to the wireless communication unit 3 based on the signal level or error ratio of the receive signal. Referencing the storage 121 and in case the received ID matches the authentication ID and the distance to the wireless communication unit 3 is within a predetermined distance (authentication distance), the determination part 123 determines that authentication is approved, and otherwise, determines that authentication is disapproved. As an authentication result, the determination part 123 outputs an authentication flag (for example, approval of authentication: 0; disapproval of authentication: 1) to the use limit determination part 13.

The use limit determination part 13 includes a use limit instruction part 131 and a counter 132. The counter 132 measures the time based on a clock coming from the timer 14 in accordance with in instruction from the use limit instruction part 131 and outputs the measurement result to the use limit instruction part 131. The use limit instruction part 131 detects an authentication flag outputted from the determination part 123 of the radio authentication part 12, detects that input operation to switch the IC card 17 to an unlock state is accepted by the operation part 15, and detects the voltage value noticed by the voltage detector 18. The use limit instruction part 131 outputs an instruction to limit the use of a predetermined feature to the terminal controller 11 depending on the authentication flag, and outputs to an IC card 172 an instruction to select a lock state or an unlock state in accordance with the input operation by the operation part 15 and the voltage value noticed from the voltage detector 18. The use limit instruction part 131 uses the output from the counter 132 to grasp the time that has elapsed since an instruction to select the unlock state was outputted to the IC card 17.

The IC card 17 includes an IC radio part 171, a rectifier 172, a memory 173 and a controller 174 and communicates information such as electronic money with the above components.

The IC radio part 171 uses the radio wave for short distance communications used in RFID (Radio Frequency Identification) to perform wireless communications with the card reader/writer 2 via an antenna. Wireless communications with the card reader/writer 2 are not limited to RFID but may include other types of short distance communications (such as UWB (Ultra Wide Band or Bluetooth).

The rectifier 172 converts the radio wave inputted to the IC radio part 171 in the mobile terminal 1 as the mobile terminal 1 approaches the card reader/writer 2 to a dc voltage and uses the dc voltage to drive the IC card 17.

The memory 173 stores the data communicated between the IC card 17 and the card reader/writer 2. The memory 173 can respond to a data read request or data write request coming from the card reader/writer 2 while the IC card 17 is not set to the lock state by the mobile terminal 1.

The controller 174 controls the operation of the IC card 17 in order to perform wireless communications with the card reader/writer 2. To be more specific, the controller 174 makes control to extract the relevant data from the memory 173 in accordance with a data read request coming from the card reader/writer 2 received by the IC radio part 171 and engages the IC radio part 171 to transmit the data to the card reader/writer 2. The controller 174 places the IC radio part 171 into a lock sate to inhibit wireless communications or an unlock state to permit wireless communications in accordance with an instruction to select the lock state or an instruction to select the lock state received from the use limit instruction part 131. Note that, a wireless communication situation is possible where, in the lock state, though the IC card 17 does not perfectly carry out the wireless communications with the card reader/writer 2 the IC card 17 receives a radio wave from the card reader/writer 2 but does not transmit the data stored in the memory 173 to the card reader/writer 2 in response to a command included in the radio wave. What counts is that data must not be transmitted to the card reader/writer 2 from a locked IC card 17.

The wireless communication unit 3 includes a radio authentication part 31 for performing radio authentication of the mobile terminal 1. The radio authentication part 31 includes a storage 311, a radio part 312 and a determination part 313 respectively performing similar operations as those of the storage 121, radio part 122 and determination part 123 in the radio authentication part 12 of the mobile terminal 1.

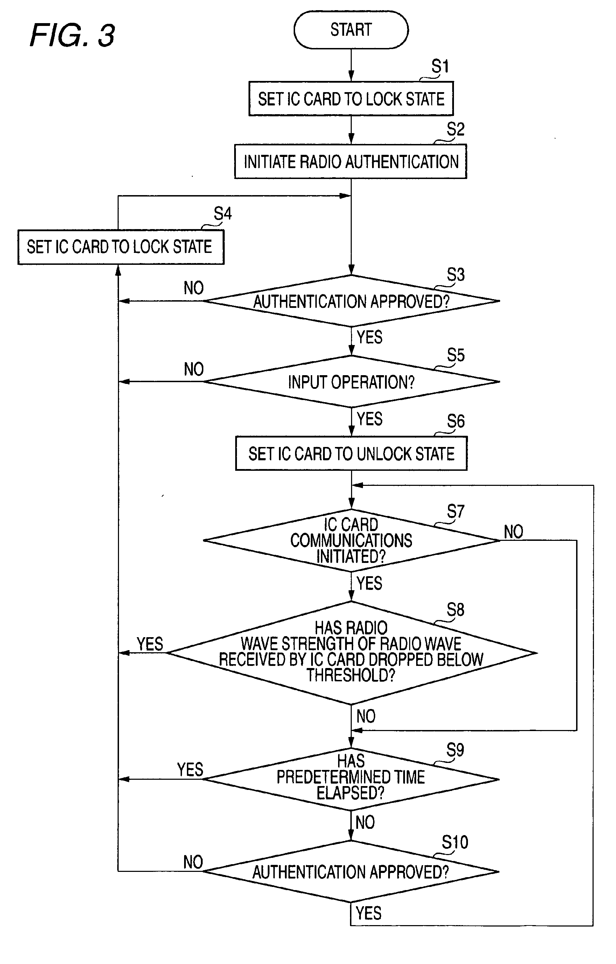

The flow of processing by the mobile terminal according to an embodiment of the invention will be described referring to the processing flow by the mobile terminal according to an embodiment of the invention shown in Fig. 3.

The use limit instruction part 131 of the mobile terminal 1 sets the IC card 17 to a lock state when the power is turned on (stop S1). The IC card may be set to an unlock state at power on although the IC card remains in the unlock state until the IC card is switched to the lock state as described later and in the meantime fraudulent use or skimming by a third party could take place. Thus processing of step S1 is preferred. After that, the radio authentication part 12 initiates wireless communications with the wireless communication unit 3 and detects the distance to the wireless communication unit 3 and performs authentication depending on whether the distance to the wireless communication unit 3 is within an authentication distance (step S2).

When the radio authentication part 12 determines that the distance to the wireless communication unit 3 is within an authentication distance and authentication is approved (YES in step S3), the use limit instruction part 131 activate a state to accept input operation by the operation part 15, that is, allows the terminal controller 11 to perform processing in accordance with the input operation accepted by the operation part 15. The radio authentication part 12, determining that the distance from the wireless communication unit 3 is long and authentication is disapproved (NO in step S3), the use limit instruction part 131 maintains the lock state of the IC card 17 (step S4) and inhibits the operation part 15 from performing a predetermined feature of the mobile terminal 1 with the terminal controller 11.

After processing in step S3, accepting predetermined operation (such as a push on an operation key arranged on the side face of the mobile terminal 1) by the operation part 15 in step S5), the use limit instruction part 131 sets the IC card 17 to an unlock state (step S6). The IC card 17 now switched to the unlock state performs communications with the card reader/writer 2 in case it is within a range to allow radio communications with the card reader/writer 2 (YES in step S7) . After switching the IC card 17 to the unlock state, the voltage detector 18 assumes that the field strength under measurement has made a transition from a numeric value to permit communications to a numeric value to inhibit communications between the IC card and the reader/writer 2 (the field strength being measured has made a transition from above a threshold to below the threshold) (YES in step S8), the use limit instruction part 131 that has detected this change places the IC card to the lock state (step S4). The case where the IC card is switched to a lock state after YES in step S8 is called a first mode.

After step S6, the IC card 17 now set to the unlock state cannot perform communications with the card reader/writer 2 in case the card reader/writer 2 is not within the range to permit communications (NO in step S7). In this case, when the counter 132 that has been counting time since the IC card 17 was switched to the unlock state counts time for a predetermined duration (YES in step S9), the use limit instruction part 131 detecting this event switches the IC card to the lock state (step S4). Even in case the counter 132 has not yet counted time for a predetermined duration (NO in step S9), when the radio authentication part 12 determines that the distance to the wireless communication unit 3 is greater than the authentication range and authentication is disapproved (NO in step S10), the use limit instruction part 131 switches the IC card to the lock state (step S4) . Processing from step S6 to step S4 may be associated with the behavior of the user of a mobile terminal as follows. The user of a mobile terminal who has switched the IC card 17 to an unlock state outside a range to permit wireless communications with the card reader/writer 2 stays with the IC card 17 for a predetermined time outside a range to permit wireless communications until the IC card 17 is automatically switched to a lock state. Or, in case the user of a mobile terminal has left the wireless communication unit 3 somewhere that he/she held when the IC card 17 was switched to the unlock state, the IC card 17 is automatically switched to the lock state.

In case the field strength being measured with the voltage detector 18 maintains a value to permit communications between the IC card and the card reader/writer 2 (NO in step S8), when the counter 132 that has been counting time since the IC card 17 was switched to the unlock state counts time for a predetermined duration (YES in step S9), the use limit instruction part 131 detecting this event may switch the IC card to the lock state (step S4) (the case where the IC card is switched to a lock state after YES in step S9 is called a second mode). Or, even in case the counter 132 has not yet counted time for a predetermined duration (NO in step S9), when the radio authentication part 12 determines that the distance to the wireless communication unit 3 is greater than the authentication range and authentication is disapproved (NO in step S10), the use limit instruction part 131 that is notified of this event may switch the IC card to the lock state (step S4). This is to automatically switch the IC card 17 to the unlock state when a predetermined time has elapsed since the IC card 17 and the card reader/writer 2 initiated communications with each other in case the user of a mobile terminal gives a first priority to prevention of skimming rather than services available by way of communications between the IC card 17 and the card reader/writer 2.

A configuration is possible where it is set in advance to which of the first mode or second mode the first priority is given. With this configuration, in case the user of a mobile terminal wishes to give the first priority to services available through communications between the IC card 17 and the card reader/writer 2 (that is, to give the first priority to the first mode), the unlock state is maintained until the field strength measured by the voltage detector 18 makes a transition from a numeric value to permit communications to a numeric value to inhibit communications between the IC card and the communication 2. In case the user of a mobile terminal wishes to give the first priority to prevention of skimming the IC card 17 (that is, to give the first priority to the second mode), the IC card may be switched to the lock state when a predetermined time has elapsed since the IC card 17 was switched to the unlock state, even though the field strength measured by the voltage detector 18 maintains a numeric value to permit communications between the IC card ad the card reader/writer 2.

With the mobile terminal according to an embodiment of the invention, in case the user of a mobile terminal holds both the mobile terminal and a radio communication unit set as a counterpart of the mobile terminal and when the user of a mobile terminal has made predetermined operation on the mobile terminal, the mobile terminal switches the locked IC card to an unlock state. In case the radio communication unit and the mobile terminal are not close to each other, particularly in case the user of a mobile terminal holds a radio communication unit but not a mobile terminal, there is no possibility of the IC card being unlocked thus preventing the IC card from being fraudulently used or skimmed. In case the user of a mobile terminal holds both a radio communication unit and a mobile terminal, the user of a mobile terminal makes simple operation such as a push on an operation key on the mobile terminal to place the IC card in an unlock state. The locked IC card is thus switched to the unlock state with such simple operation. After switching the IC card from the lock state to the unlock state with such simple operation, the user of a mobile terminal holds the unlocked IC card over an IC card reader to initiate wireless communications. At the instant when the user moves the IC card away from the IC card reader, the IC card is switched to the lock state. It is thus possible to keep the IC card in the unlock state in a minimum duration necessary for wireless communications with the IC card reader.

While switching the IC card between the lock state and the unlock state has been discussed in detail with the mobile terminal according to an embodiment of the invention, various features of recent mobile terminals mat be disabled on top of switching the IC card to a lock state on disapproval of authentication between the mobile terminal 1 and the wireless communication unit 3.

While the invention has been described in detail and referring to a specific embodiment, those skilled in the art will recognize that various changes and modifications can be made in it without departing the spirit and scope thereof.

This application is based on the Japanese patent application (Patent Application 2005-340880) filed November 25, 2005 and its content is herein incorporated as reference.

### Industrial Applicability

The mobile terminal according to the invention is advantageous in that it is capable of capable of switching an unlocked IC card to a lock state with optimum timing for the IC card user while preventing an unlocked IC card from being skimmed and switching a locked IC card to an unlock state with simple operation, and is thus useful in the field of mobile terminals that mounts an IC card for performing wireless communications with a card reader/writer.

## Claims

1. A mobile terminal including an IC circuit capable of performing wireless communications with an IC card reader, said mobile terminal comprising:
an IC card use controller for switching said IC circuit to a lock state where wireless communication with said IC card reader is inhibited or an unlock state where wireless communication with said IC card reader is permitted; and
a radio wave strength detector for said IC circuit in said unlock state to detect the radio wave strength of a radio wave received from said IC card reader;
wherein said IC card use controller switches said IC circuit to said lock state when the radio wave strength detected by said radio wave strength detector has made a transition from a threshold or above to below the threshold.

2. The mobile terminal according to claim 1, further comprising:
an operation part for accepting input operation from the user of the mobile terminal; and
a radio authentication part for detecting the distance to an external wireless communication unit and determining whether authentication is allowed or inhibited depending on whether the distance to said wireless communication unit is within an authentication-allowed distance;
wherein said IC card use controller accepts predetermined input operation and switches said IC circuit to said unlock state when said radio authentication part has determined that authentication is allowed.
